(19) Europäisches Patentamt
European Patent Office
Office européen des brevets

(11) Publication number: 0 091 520 B1

(12) **EUROPEAN PATENT SPECIFICATION**

(45) Date of publication of patent specification: **10.12.86**

(51) Int. Cl.[4]: **H 01 M 10/36**, H 01 M 2/40, H 01 M 4/38

(21) Application number: **82301919.5**

(22) Date of filing: **14.04.82**

(54) **Electrolytes circulation type metal-halogen secondary battery.**

(43) Date of publication of application:
**19.10.83 Bulletin 83/42**

(45) Publication of the grant of the patent:
**10.12.86 Bulletin 86/50**

(84) Designated Contracting States:
**DE FR GB IT**

(56) References cited:
**GB-A-1 551 862**
**GB-A-1 551 873**
**GB-A-1 569 397**
**GB-A-1 569 399**
**GB-A-2 005 064**

(73) Proprietor: **Kabushiki Kaisha Meidensha**
**1-17, Ohsaki 2-chome**
**Shinagawa-ku Tokyo 141 (JP)**

(72) Inventor: **Fujii, Toshinobu**
**4-20-12 Hinodai**
**Hino-shi Tokyo (JP)**
Inventor: **Kokado, Akira**
**1-35-22-402 Sangenjaya**
**Setagaya-ku Tokyo (JP)**

(74) Representative: **Brock, Peter William et al**
**Michael Burnside & Partners 2 Serjeants' Inn**
**Fleet Street**
**London EC4Y 1HL (GB)**

**EP 0 091 520 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to electrolyte circulation type secondary batteries, particularly electrolyte circulation type metal-halogen secondary batteries. More particularly, the invention relates to a metal-bromine secondary battery which employs a complexing agent such that the complexing agent combines with the bromine molecules in the positive electrolyte so that the bromine molecules separated from the electrolyte form a bromine complex compound in an oily form and precipitate in the lower part of the positive electrolyte storage tank.

The electrolyte circulation type metal-halogen secondary batteries known in the art are basically constructed as shown in Fig. 1 of the accompanying drawings. In this Figure, numeral 1 designates a negative electrode, 2 a negative electrode chamber, 3 a positive electrode, 4 a positive electrode chamber, 5 a separator arranged substantially midway between the negative and positive electrodes (1, 3), 6 a negative electrolyte storage tank, 7 a positive electrolyte storage tank, 8 a positive electrolyte including a bromine complex compound, 9 electrolyte circulation pumps, 10 valves, and 11 a bypass for circulating the positive electrolyte including no bromine complex compound.

While the metal used may be zinc, cobalt, cadmium or copper, if zinc is selected, for example, a reaction $Zn^{++}+2e^- \rightarrow Zn$ takes place in the negative electrode chamber during charging, and a reaction $2Br^- \rightarrow Br_2+2e^-$ takes place in the positive electrode chamber. During discharging, the reverse reactions proceed.

Note that the negative electrolyte consists of an aqueous solution of $ZnX_2$ (X is a halogen atom) and the positive electrolyte consists of an aqueous solution of $ZnBr_2$, $Br_2$ and a bromine complexing agent.

The separator for dividing the two electrolyte chambers generally comprises a perforated membrane of polyolefine type or ion exchange membrane.

When this type of secondary battery is charged, the bromine deposits onto the positive electrode and the metal deposits onto the negative electrode. While the metal deposited onto the negative electrode is electrodeposited on the electrode plate, the bromine deposited onto the positive electrode is dissolved into the electrolyte and circulated along with the electrolyte.

There is another disadvantage that during the operation of the battery, a part of the deposited bromine passes through the separator and reaches the metal deposited on the negative electrode thus causing self-discharge. Also, bromine is itself a highly corrosive substance and thus limitations are imposed on the selection of materials for forming the battery.

In view of these restrictions, no electrolyte circulation type metal-halogen secondary battery has been put into practical use.

The inventors have made various studies on the foregoing deficiencies in the prior art, particularly the prevention of self-discharge, which is the principal disadvantage, and have made the present invention.

Therefore, it is the primary object of the invention to provide an improved electrolyte circulation type metal-halogen secondary battery in which the positive electrolyte includes a complexing agent which catches and reacts with the bromine deposited during the charging in such a manner that the bromine is separated from the electrolyte and precipitates as a bromine complex compound in the lower part of the positive electrolyte storage tank.

According to the invention, the positive electrolyte contains at least one acid, and, as bromine complexing agent, a tertiary amine of the formula

$$R\ R'\ R''\ N$$

in which R, R' and R'', which may be the same or different, are each a $C_1$—$C_4$ alkyl group.

Fig. 1 is a schematic diagram showing the construction of a prior art metal-halogen secondary battery.

Fig. 2 is a characteristic diagram showing the relation between the concentration of complexing agents and the concentration of bromine molecules in the supernatant electrolyte.

Fig. 3 is a characteristic diagram showing the variations of pH behaviour due to the addition of hydrochloric acid to the positive electrolyte.

Fig. 4 is a characteristic diagram showing the variations of pH behaviour due to the addition of hydrobromic acid in place of hydrochloric acid.

Fig. 5 shows characteristic diagrams showing the behaviours of the amount, density and viscosity of the formed bromine complex compound in relation to the dropping of bromine into the electrolyte.

Fig. 6 shows the electrolyte storage tank of Fig. 1 in which a filter is arranged in the lower part of the storage tank.

In the past, the use of a quaternary ammonium salt as the complexing agent for achieving the above-mentioned object of effect has been proposed. The electrolyte used in the above type of secondary battery system generally consists of an aqueous solution of metal bromide and the heretofore proposed quaternary ammonium salt dissolves into the electrolyte. Thus, the bromine deposited during the charging combines with the quaternary ammonium salt and the resulting compound precipitates in the lower part of the positive electrolyte storage tank. However, there is a disadvantage that the dissolution of the quaternary ammonium salt into the electrolyte decreases its electric conductivity and the internal resistance of the battery is increased.

During the discharging, the precipitated bromine complex compound and the upper electrolyte containing no bromine complex compound are mixed and transported to the electrode chamber and the bromine complex compound contributes to the electrode reaction.

The heretofore proposed quaternary ammonium salts are represented by the general formulas of $R_4N^+ \cdot X^-$, $R_3R'N^+ \cdot X^-$ and $R_2R'_2N^+ \cdot X^-$ (in the formulas, R and R' are alkyl groups of $C_1$ to $C_3$ and X is a halogen, particularly bromine ion or chlorine ion). Other usable quaternary ammonium salts include for example a derivative of morpholine in which nitrogen atom is a member of the cyclic structure.

On the other hand, the complexing agents used in this invention consist of tertiary amines which are given by the general formula R R' R'' N (where R, R' and R'' are alkyl groups of $C_1$ to $C_4$ and these groups may be either the same or different from one another).

Generally, the tertiary amines are not soluble in water and these tertiary amines are of course not solved completely in the electrolyte of this invention thus separating the electrolyte into two phases. As a result, the electric resistance of the aqueous electrolyte solution is not increased and moreover the tertiary amine is combined with the bromine deposited during the charging to form a bromine complex compound. The resulting bromine complex compound dissolves into the complexing agent (the tertiary amine) region and they form a single phase condition. Then, during the discharge the separated two phases, that is, the upper electrolyte and the lower bromine complex compound region (or a single region which is a mixed region of the complexing agent and the bromine complex compound) are transported to the electrochemical reaction chamber (cell chamber) so that the bromine complex compound contacts with the electrode surface, causes an electrochemical reaction and contributes as the active material.

The tertiary amines which can be used in this invention include trimethylamine, triethylamine, tripropylamine and tributylamine (including normal and iso).

Where a solution in which an electrolyte and a complexing agent are separated into two phases as mentioned above is used in the metal-halogen secondary battery, the battery construction shown in figure hereinafter is generally used. The bromine electrolyte storage tank 7 serves simultaneously as an electrolyte storage tank and a reaction chamber for the bromine and the complexing agent in the diphase electrolytes. As a result, a satisfactory contact must be ensured between the bromine dissolved in the upper region and the complexing agent in the lower region.

| Complexing agent | K (mho $cm^{-1}$) | Electrolyte composition |
|---|---|---|
| $(C_2H_5)_4$ NBr | 0.106 | $ZnBr_2(3M)+(C_2H_5)_4NBr(0.2M)$ |
| $(CH_3)_3N$ | 0.081 | $ZnBr_2(3M)+(CH_3)_3N(0.9M)$ |
| $(C_2H_5)_3N$ | 0.075 | $ZnBr_2(3M)+(C_2H_5)_3N(0.9M)$ |
| $(C_3H_7)_3N$ | 0.110 | $ZnBr_2(3M)+(C_3H_7)_3N(0.9M)$ |

The above table shows the electrolyte conductivities obtained by using the quaternary ammonium salt cited as the comparative example and the three tertiary amines cited as the examples according to the invention as the complexing agents. Since the aqueous zinc bromide solution used has an electric conductivity of 0.124 mho $cm^{-1}$ at room temperature (when it contains no additives), the use of tripropylamine is also advantageous from the standpoint of the battery internal resistance since the variation of the conductivity of the supernatant electrolyte is not large. Fig. 2 shows the concentrations of the unabsorbed bromine molecules which were left in the upper electrolyte when a given amount of bromine was dropped into electrolytes containing the complexing agents in varying concentrations and bromine complex compounds were formed. In Fig. 2, A, C, and D indicate the use of tertiary amines according to the invention and B indicates the use of a quaternary morpholinium compound as comparison. As will be seen from Fig. 2, among the complexing agents used according to the present invention, the addition of tripropylamine (D) though small in quantity, had the effect of absorbing the bromine satisfactorily and the addition of 2.5 mols showed no trace of bromine molecules in the supernatant electrolyte.

The use of acids in combination with the tertiary amines used has the effect of eliminating a certain property, i.e., the insolubility of these amines.

The acids which can be used for this purpose include inorganic acids such as hydrochloric acid, nitric acid, sulfuric acid and hydrobromic acid, and organic acids having at least one carboxyl group, such as acetic acid, maleic acid and succinic acid.

The solubility of the tertiary amines in the electrolyte varies considerably with the proportions of the acids used. For example, where one mol of the tertiary amine is to be added to the electrolyte, theoretically it is only necessary to add one mol of the acid.

The following table shows the number of mols of hydrochloric acid or hydrobromic acid at the salting-out null point in cases where one mol of the tertiary amine (trimethylamine or triethylamine) is to be added to aqueous zinc bromide solutions containing varying numbers of mols of the zinc bromide.

| $ZnBr_2$ concentration (mol/l) | HCl (mol) / $(CH_3)_3N$ (mol) | HCl (mol) / $(C_2H_5)_3N$ (mol) | HBr (mol) / $(CH_3)_3N$ (mol) | HBr (mol) / $(C_2H_5)_3N$ (mol) |
|---|---|---|---|---|
| 4 | 0.80 | 0.95 | 0.78 | 0.95 |
| 3 | 0.85 | 1.00 | 0.88 | 0.97 |
| 2 | 0.89 | 0.95 | 0.95 | 0.98 |

As will be seen from the above table, it can be recognized that substantially equimolar amounts of the acids and the tertiary amines are required.

Fig. 3 shows pH variation of the positive electrolyte due to the addition of hydrochloric acid. In the Figure, the abscissa represents the added amount in ml of 10% aqueous hydrochloric solution to 50 ml of the positive electrolyte and the ordinate represents the corresponding pH value. The characteristic curves *a, b* and *c* show respectively at *d* the salting-out null points in the cases where the molar ratios between the zinc bromide and the tertiary amines are 4:1, 3:1 and 2:1, respectively.

Fig. 4 shows the variations in the pH of the positive electrolyte due to the addition of aqueous hydrobromic acid solution. The abscissa represents the addition in ml of 10% aqueous hydrobromic acid solution to 50 ml of the positive electrolyte and the ordinate represents the corresponding pH value. In the Figure, the characteristic curves *a, b* and *c* respectively correspond to the cases where the molar ratios between the zinc bromide and the tertiary amine are 4:1, 3:1 and 2:1, respectively, and the salting-out null points are indicated at *d* in the like manner as in Fig. 3.

In either of the cases of Figs. 3 and 4, the pH of the electrolyte decreased suddenly when the aqueous acid solution was added in amounts exceeding those corresponding to the salting-out null points. While this decrease in pH value can be modified to describe a gentle curve by decreasing the concentration of the acid used, it is desirable to adjust the pH of the electrolyte to a value intermediate between the pH value indicated by the electrolyte itself and the pH value corresponding to the salting-out null point. If the adjustment of the pH value results in an excessively small value, the difference with respect to the zinc side electrolyte increases considerably and this causes a vigorous movement of the electrolytes through the separator due to the proton concentration difference.

Figs. 5(a), (b) and (c) show respectively the amount of absorbed bromine or the amount of bromine complex compound formed, its specific weight and its viscosity which were obtained with the positive electrolyte in which the aqueous zinc bromide solution, triethylamine and hydrochloric acid (equal in mol with the triethylamine) were adjusted by the above-mentioned method. In each of these Figures, the abscissa represents the amount of bromine ($Br_2$) added by dropping to 50 ml of the aqueous zinc bromide solution. With respect to the bromine complex compound formed, the amount is indicated in ml by the ordinate in Fig. 5(a), the density is indicated in g/ml by the ordinate in (b) and the viscosity is indicated in cP by the ordinate in (c). In Figs. 5(a), (b) and (c), the curves A show the cases where 10 g of triethylamine was added to 50 ml of an aqueous solution containing 3 mols of zinc bromide ($ZnBr_2$), the curves B show the cases where 5 g of triethylamine was added to 50 ml of an aqueous solution containing 1 mol of $ZnBr_2$ and the curves c show the cases where 5 g of triethylamine was added to 50 ml of an aqueous solution containing 3 mols of $ZnBr_2$.

Further, when 5 g of trimethylamine and the equimolar of hydrochloric acid were added to 50 ml of an aqueous solution containing 3 mols of $ZnBr_2$ and $Br_2$ was dropped into the resulting mixed aqueous solution, the formation behavior of bromine complex compound was confirmed as a tendency such as shown in Fig. 5, and the same results were obtained when hydrobromic acid was used in place of the hydrochloric acid.

While the heretofore proposed quaternary ammonium salt has the disadvantage of increasing the amount of absorbed bromine (bromine complex compound) and thereby tending to solidify the oily complex compound, it has been confirmed that there was no solidified region in the cases where the tertiary amines and acids according to the invention were used.

The bromine complex compound according to the invention does not solidify and moreover if the amount of absorbed bromine increases, the viscosity decreases as shown in (c) of Fig. 5 with the result that during the charging or discharging periods the positive electrolyte is circulated easily, is easy to handle, reduces the head loss in the circulation system including the pumps, valves and liquid transfer pipes, flows uniformly within the positive electrode chamber and ensures a satisfactory reaction at the electrode.

Where 2.5 mols of triethylamine was dissolved with hydrochloric acid in 50 ml of an aqueous solution containing 0.5 mols of $ZnBr_2$, and 6.4 ml of $Br_2$ was dropped into the resulting solution, it was confirmed that the concentration of the bromine in the electrolyte was substantially zero, that is, practically all of $Br_2$ was converted into a bromine complex compound. This dropped amount of $Br_2$ corresponds to an 80% charged level of the metal-bromine battery.

From the foregoing detailed description it will be seen that in accordance with the invention there is provided an electrolyte circulation type metal-bromine secondary battery in which the positive electrolyte using bromine as the positive active material is prepared by adding a tertiary amine represented by the

general formula R R′ R″ N, and an inorganic acid or organic acid, to an aqueous solution of a metal bromine (e.g., zinc bromide), whereby during the charging period, the bromine molecules formed in the positive electrode chamber are absorbed by the bromine-complexing agent consisting of the tertiary amine and the acid and a bromine complex compound is formed which has practically no danger of solidification and is low in viscosity. Thus, the present invention can realize the electrolyte circulation type metal-halogen secondary battery capable of easily realizing a positive electrolyte circulation system, ensuring a uniform flow distribution and eliminating the deficiencies due to free bromine.

Where a complexing agent is used in accordance with the invention, the rate of reaction between the free bromine and the complexing agent can be increased by arranging in a relatively lower complexing agent retaining portion of the positive electrolyte storage tank, preferably adjacent to the electrolyte exit port a filter which is designed so that when the electrolyte is circulated, the complexing agent is prevented from flowing out and the contact area with the electrolyte is increased.

In order to effect the reaction efficiently, it is desirable to use a filter having a large number (innumerable) of fine perforations and practically equal in area with the bottom surface of the storage tank. A preferred exemplary filter may be a glass fiber filter of a suitable thickness.

Fig. 6 shows an example of the filter. In the Figure, numeral 7 designates the positive electrolyte storage tank (the bromine electrolyte tank) of Fig. 1, 8 the bromine complex compound region formed by the complexing agent comprising the tertiary amine, 13 the filter, and 12 separated particles in the electrolyte.

On discharge, the valve 10 is opened so that the electrolyte circulated from the cell chamber 4 to the electrolyte storage tank 7 and returned again to cell chamber 4 from the electrolyte storage tank 7 via the filter 13. On charging, the electrolyte is circulated in the reverse order.

It will thus be seen from the foregoing description that in accordance with the present invention the bromine deposited during the operation of the battery has no danger of reaching the metal side electrode and causing a self-discharge and also there is no danger of any decrease in the electric conductivity of the electrolyte and increase in the battery internal resistance, thereby ensuring excellent performance.

**Claims**

1. An electrolyte circulation type metal-halogen secondary battery having a cell chamber divided into a negative electrode chamber and a positive electrode chamber by a separator, a negative electrolyte storage tank and a positive electrolyte storage tank connected to one another by pipes, and a positive electrolyte comprising a metal bromide and a bromine-complexing agent, characterised in that the positive electrolyte contains at least one acid and, as bromine-complexing agent, a tertiary amine of the formula

R R′ R″ N

in which R, R′ and R″, which may be the same or different, are each a $C_1$—$C_4$ alkyl group.

2. A secondary battery according to Claim 1 characterized in that said metal bromide is zinc bromide.

3. A secondary battery according to Claim 1 or 2 characterized in that the acid comprises at least one acid selected from hydrochloric acid, sulfuric acid, nitric acid, hydrobromic acid, acetic acid, oxalic acid, maleic acid, and succinic acid.

4. A secondary battery according to any preceding claim characterized in that said tertiary amine and said acid are employed in equimolar amounts.

5. A secondary battery according to any preceding claim characterized in that said positive electrolyte storage tank contains a filter.

**Patentansprüche**

1. Metall-Halogen-Sekundärbatterie mit zirkulierendem Elektrolyt, die eine Zellenkammer, welche durch einen Separator in eine negative Elektrodenkammer und eine positive Elektrodenkammer aufgeteilt ist, einen negativen Elektrolytspeicherbehälter und einen positiven Elektrolytspeicherbehälter, welche miteinander durch Röhren verbunden sind, und einen positiven Elektrolyt aufweist, welcher ein Metallbromid und einen Brom-Komplexbildner enthält, dadurch gekennzeichnet, daß der positive Elektrolyt mindestens eine Säure und als Brom-Komplexbildner ein tertiäres Amin mit der Formel

R R′ R″ N

enthält, in der R, R′ und R″, welche gleich oder unterschiedlich sein können, jeweils eine $C_1$—$C_4$ Alkylgruppe sind.

2. Sekundärbatterie nach Anspruch 1, dadurch gekennzeichnet, daß das Metallbromid Zinkbromid ist.

3. Sekundärbatterie nach Anspruch 1 oder 2, dadurch gekennzeichnet, daß die Säure mindestens eine Säure enthält, die aus Salzsäure, Schwefelsäure, Salpetersäure, Bromwasserstoffsäure, Essigsäure, Oxalsäure, Maleinsäure und Bernsteinsäure ausgewählt ist.

4. Sekundärbatterie nach einem der vorangehenden Ansprüche, dadurch gekennzeichnet, daß das genannte tertiäre Amin und die genannte Säure in äquimolaren Mengen verwendet sind.

5. Sekundärbatterie nach einem der vorangehenden Ansprüche, dadurch gekennzeichnet, daß der genannte positive Elektrolytspeicherbehälter ein Filter enthält.

**Revendications**

1. Batterie secondaire métal-halogène du type à circulation de l'électrolyte comportant une chambre formant cellule divisée, par un séparateur, en une chambre d'électrode négative et en une chambre d'électrode positive, comportant aussi un réservoir d'électrolyte négatif et un réservoir d'électrolyte positif reliés l'un à l'autre par des conduites, et présentant un électrolyte positif comprenant un bromure métallique et un agent de formation de complexe de brome, caractérisée en ce que l'électrolyte positif contient au moins un acide et, comme agent de formation du complexe de brome, une amine tertiaire de la formule

$$R\,R'\,R''\,N$$

dans laquelle R, R' et R", qui peuvent être les mêmes ou différents sont chacun un groupement alcoyle $C_1$—$C_4$.

2. Batterie secondaire selon la revendication 1, caractérisée en ce que ledit bromure métallique est du bromure de zinc.

3. Batterie secondaire selon la revendication 1 ou la revendication 2, caractérisée en ce que l'acide comporte au moins un acide choisi parmi l'acide chlorhydrique, l'acide sulfurique, l'acide nitrique, l'acide bromhydrique, l'acide acétique, l'acide oxalique, l'acide maléique et l'acide succinique.

4. Batterie secondaire selon l'une quelconque des revendications précédentes, caractérisée en ce que ladite amine tertiaire et ledit acide sont employés en quantités équimolaires.

5. Batterie secondaire selon l'une quelconque des revendications précédentes, caractérisée en ce que ledit réservoir de l'électrolyte positif contient un filtre.

FIG. 1

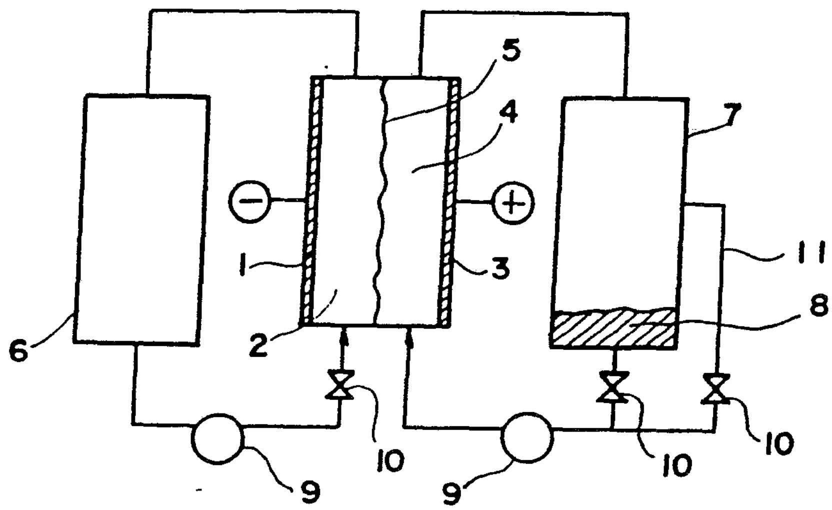
1
2
3
4
5
6
7
8
9
10
11

FIG. 2

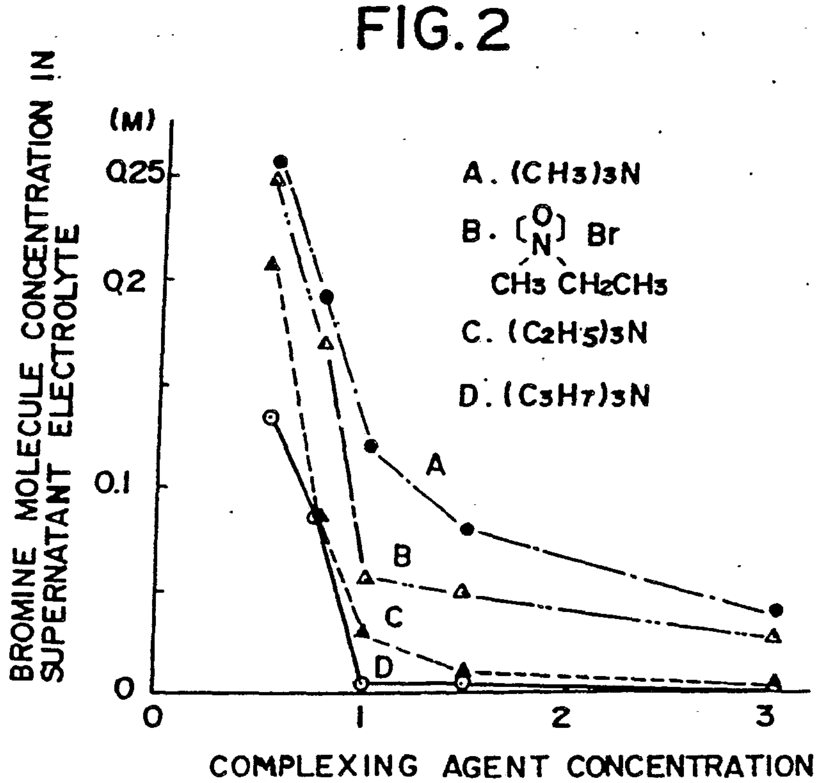
BROMINE MOLECULE CONCENTRATION IN SUPERNATANT ELECTROLYTE
(M)
0.25
0.2
0.1
0
1
2
3
COMPLEXING AGENT CONCENTRATION
A. (CH3)3N
B.
Br
CH3 CH2CH3
C. (C2H5)3N
D. (C3H7)3N
A
B
C
D

FIG. 3

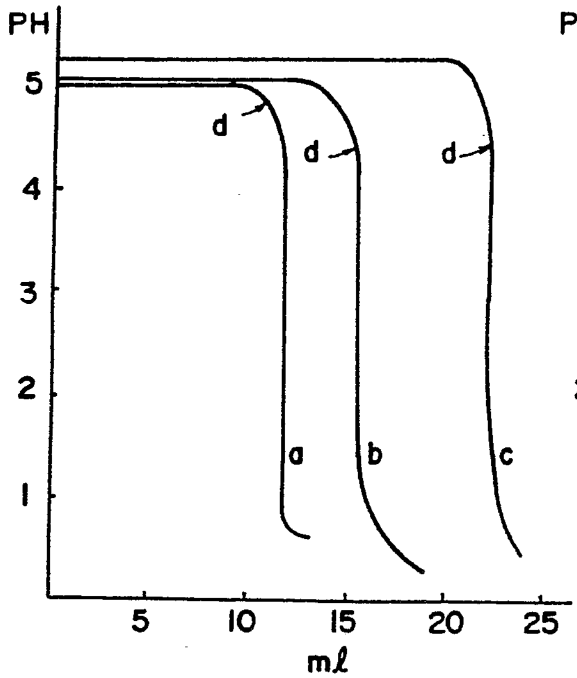


FIG. 4

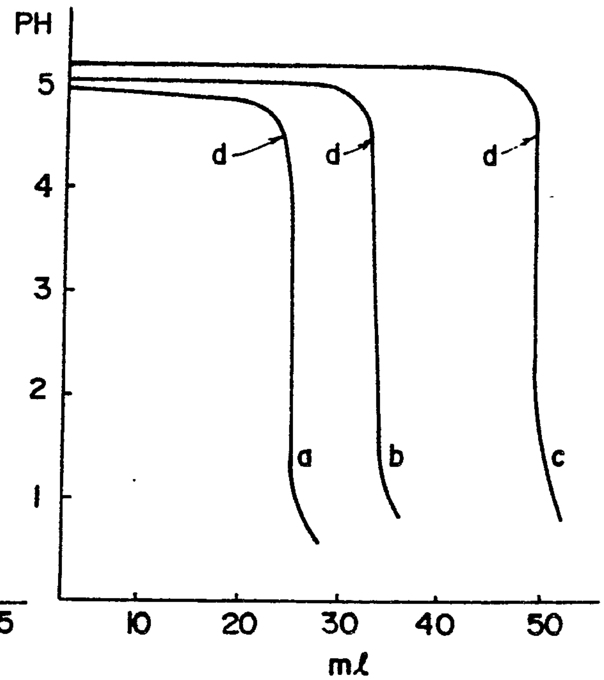


FIG. 6

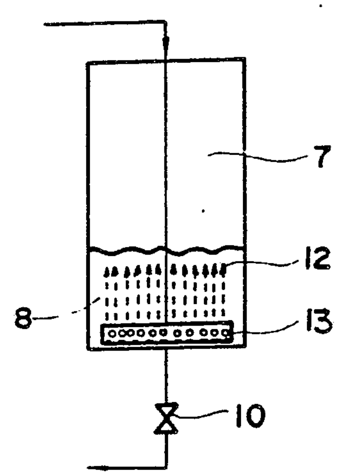

FIG.5

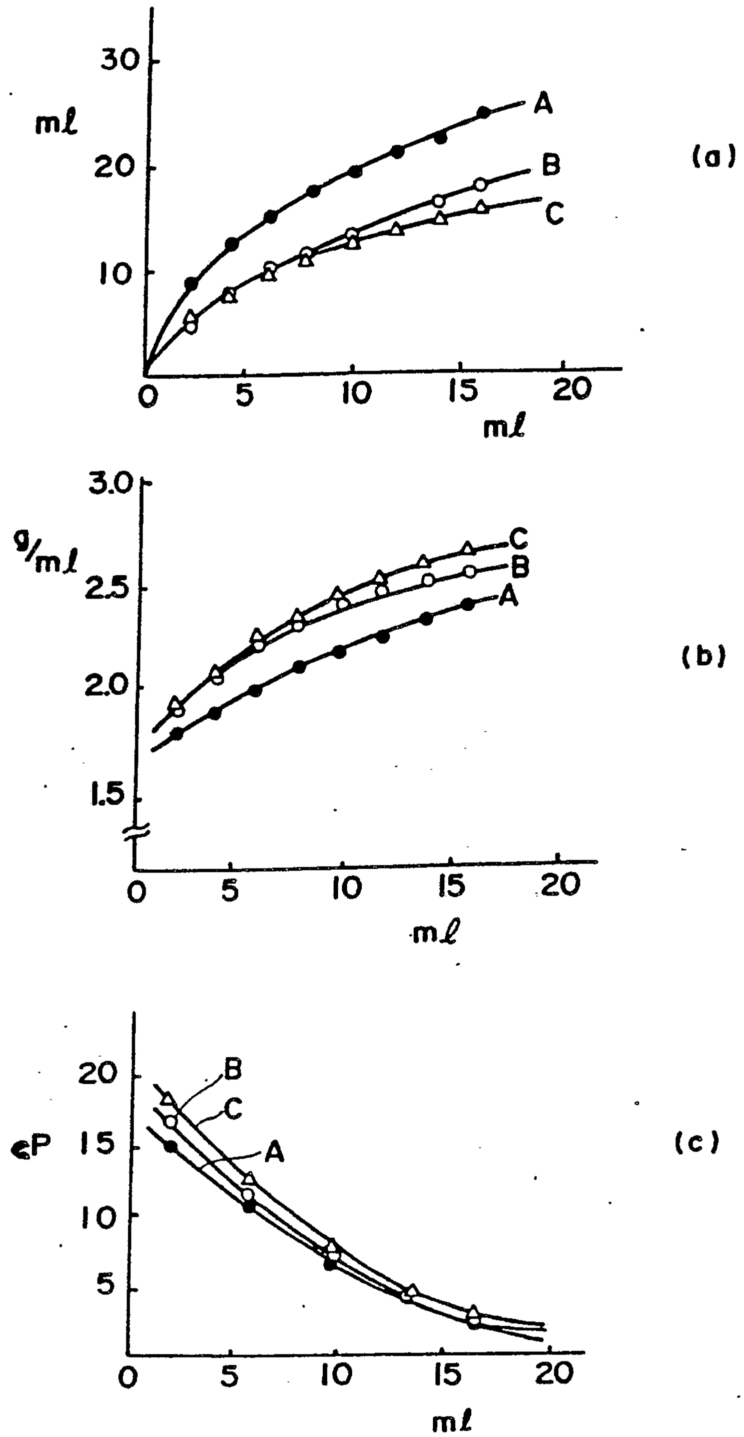

30
mℓ
20
10
A
B
C
(a)
0
5
10
15
20
mℓ
3.0
g/mℓ
2.5
2.0
1.5
C
B
A
(b)
0
5
10
15
20
mℓ
20
cP
15
10
5
B
C
A
(c)
0
5
10
15
20
mℓ